# EUROPÄISCHE PATENTSCHRIFT

(11) **EP 1 924 612 B1**
(45) Veröffentlichungstag und Bekanntmachung des Hinweises auf die Patenterteilung: **13.01.2010**
(21) Anmeldenummer: 06777092.5
(22) Anmeldetag: 28.08.2006
(51) Int. Cl.: C08F 8/08, C08F 10/10, C08F 8/00, C08G 18/62

(54) **EPOXIDIERUNG VON ISOBUTENPOLYMEREN**
EPOXIDATION OF ISOBUTENE POLYMERS
EPOXYDATION DE POLYMERES D'ISOBUTENE

(30) Priorität: 02.09.2005 DE 102005041789
(43) Veröffentlichungstag der Anmeldung: 28.05.2008
(73) Patentinhaber: BASF SE, 67056 Ludwigshafen (DE)
(72) Erfinder: RATH, Hans, Peter, 67269 Grünstadt (DE); LANGE, Arno, 67098 Bad Dürkheim (DE); MACH, Helmut, 69115 Heidelberg (DE); BLACKBOROW, Richard, F-67000 Strasbourg (FR)
(86) Internationale Anmeldenummer: PCT/EP2006/008407
(87) Internationale Veröffentlichungsnummer: WO 2007/025700

(56) Entgegenhaltungen:
- EP-A2- 0 487 278
- WO-A-00/24726
- WO-A-92/14806
- WO-A-99/33886
- WO-A-03/074577
- US-A- 3 382 255
- US-B1- 6 303 703

## Beschreibung

Die Erfindung betrifft ein Verfahren zur Epoxidierung von ethylenisch ungesättigten Isobutenpolymeren.

Homo- und Copolymere des Isobutens finden in vielfältiger Weise Verwendung, beispielsweise zur Herstellung von Kraftstoff- und Schmierstoff-Additiven, als Elastomere, als Klebstoffe oder Klebrohstoffe oder als Grundbestandteil von Dichtungs- und Versiegelungsmassen. Für die Weiterverarbeitung, beispielsweise zu Dichtungs- und Versiegelungsmassen oder zu Klebe(roh)stoffen, besonders geeignete Polyisobutene sind telechel, d.h. sie weisen zwei oder mehr reaktive Endgruppen auf.

Epoxygruppen sind bevorzugte reaktive Endgruppen; sie können in vielfältiger Weise mit geeigneten Reaktionspartnern umgesetzt oder in andere funktionelle Gruppen umwandelt werden, ohne dass spezielle Hochdruck- bzw. -temperaturbedingungen erforderlich sind.

Aus der WO 92/14806 und der US 6,303,703 geht ein Verfahren zur Epoxidierung von Isobutenpolymeren hervor, bei dem man Polyisobuten in einem Kohlenwasserstoff (Heptan bzw. Xylol) und Essigsäure vorlegt und 70%ige oder 50%ige wässrige Wasserstoffperoxidlösung und eine Mineralsäure (Phosphorsäure und Schwefelsäure) zulaufen lässt. Nach beendetem Zulauf wird die Umsetzung durch sechsstündiges Rühren bei 80 °C vervollständigt.

Die US 3,382,255 beschreibt epoxydierte Olefinpolymere, die durch Umsetzung eines von einem Olefin mit 2 bis 12 Kohlenstoffatomen abgeleiteten Polymers und einer Persäure hergestellt sind.

Die WO-A 00/24726 beschreibt ein Verfahren zur Epoxydierung von Olefinen mit Percarbonsäure in einer Reaktionsmischung aus einer wässrigen Phase und einer organischen Phase, wobei die Percarbonsäure in der wässrigen Phase *in situ* aus Wasserstoffperoxid und einer Carbonsäure oder einem Carbonsäureanhydrid gebildet wird und die Olefine in der organischen Phase in einem organischen Lösungsmittel gelöst vorliegen. Die Epoxydierung wird in mehreren Schritten durchgeführt, wobei jeder Schritt mit jeweils einer frischen wässrigen Phase durchgeführt und nach jedem Schritt die wässrige Phase abgetrennt wird.

Die WO-A 99/33886 offenbart Multihydroxypolyalkenyl-substituierte Aminverbindungen, die durch Umsetzen eines Hydroxypolyolefinepoxids mit einem Amin erhalten sind.

Die EP-A-0 487 278 beschreibt ein funktionalisiertes Polymer, das durch Einführen einer Epoxygruppe, Hydroxygruppe oder Sulfonsäuregruppe in ein syndiotaktisches α-Olefinpolymer erhalten wird, das an seinem Terminus eine olefinische Unsättigung aufweist.

Die Handhabung hochkonzentrierter wässriger Wasserstoffperoxidlösungen (mehr als 50 Gew.% Wasserstoffperoxid) erfordert allerdings zusätzliche Sicherheitsvorkehrungen.

Der Erfindung liegt die Aufgabe zugrunde, ein Verfahren anzugeben, bei dem die Verwendung hochkonzentrierter Wasserstoffperoxidlösungen entbehrlich ist und das nach kürzerer Reaktionszeit im Wesentlichen quantitative Umsätze liefert.

Die Aufgabe wird gelöst durch ein Verfahren zur Epoxydierung eines ethylenisch ungesättigten Isobutenpolymers, bei dem man eine das Isobutenpolymer enthaltende organische Phase mit einer wässrigen Phase in Kontakt bringt, die Ameisensäure und Wasserstoffperoxid enthält, wobei man während der Umsetzung Wasser durch Azeotropdestillation entfernt.

Das epoxydierende Agens ist vermutlich Perameisensäure, die sich *in situ* aus der Ameisensäure und dem Wasserstoffperoxid bildet. Die Perameisensäure besitzt ein günstiges Verteilungsgleichgewicht zwischen der wässrigen und der organischen Phase, das in bevorzugten Ausführungsformen der Erfindung durch hohe Wasserstoffperoxid-Überschüsse und/oder Mitverwendung von

Mediatoren zusätzlich beeinflusst wird. Die Anwesenheit der wässrigen Phase ist als Reservoir für die zugesetzte oder durch Zerfall von Perameisensäure rückgebildete Ameisensäure erforderlich, da zu hohe Säurekonzentrationen in der organischen Phase unerwünschte Nebenreaktionen bewirken können, insbesondere eine Umlagerung des gebildeten Epoxids zum Aldehyd.

Das Isobutenpolymer weist wenigstens eine olefinische Doppelbindung auf, vorzugsweise an einem bzw. allen Molekülenden des Isobutenpolymers.

In der Regel enthält die organische Phase einen aliphatischen, alicyclischen oder aromatischen Kohlenwasserstoff und/oder einen halogenierten Kohlenwasserstoff. Der Kohlenwasserstoff dient als Lösungsmittel für das Isobutenpolymer und der Verringerung der Viskosität der Polymerlösung. Geeignete Kohlenwasserstoffe sind aliphatische Kohlenwasserstoffe wie Hexan, Heptan; alicyclische Kohlenwasserstoffe wie Cyclohexan, Methylcyclohexan, Ethylcyclohexan; und aromatische Kohlenwasserstoffe, wie Benzol, Toluol oder Xylol, halogenierte Kohlenwasserstoffe wie Dichlormethan, Trichlormethan, 1-Chlorbuten, 1,2-Dichlorethan oder Chlorbenzol. Toluol und Cyclohexan sind am meisten bevorzugt. Die Menge an Kohlenwasserstoff kann z. B. 25 bis 1000 Gew.-Teile, vorzugsweise 50 bis 500 Gew.-Teile, bezogen auf 100 Gew.-Teile Isobutenpolymer, betragen.

Die wässrige Phase enthält Wasserstoffperoxid und Ameisensäure. Die Menge an Ameisensäure beträgt im Allgemeinen 2 bis 100 Gew.-Teile, vorzugsweise 5 bis 50 Gew.-Teile, bezogen auf 100 Gew.-Teile Isobutenpolymer.

Handelsübliche Wasserstoffperoxidlösungen sind geeignet, insbesondere solche mit einem Wasserstoffperoxid-Gehalt von 30 oder 50 Gew.-%. Die Verwendung höherkonzentrierter Wasserstoffperoxidlösungen ist ebenfalls möglich, aber nicht bevorzugt. Die Verwendung von Wasserstoffperoxidlösungen mit weniger als 20 Gew.-% ist aus praktischen Gründen nicht bevorzugt. Das Wasserstoffperoxid wird in wenigstens stöchiometrischer Menge, bezogen auf die Zahl der zu epoxidierenden Doppelbindungen, eingesetzt, vorzugsweise jedoch im Überschuss. Der über die stöchiometrisch erforderliche Menge hinaus vorhandene Wasserstoffperoxidüberschuss kann bis zu 20 mol pro Liter wässrige Phase, vorzugsweise 0,5 bis 10 mol, betragen.

Die Reaktion erfolgt unter Übertragung eines Sauerstoffatoms vom Wasserstoffperoxid auf das Polyisobuten, wobei vermutlich temporär gebildete Perameisensäure als Sauerstoffüberträger wirkt. Mit fortschreitender Umsetzung sinkt daher die H₂O₂-Konzentration in der wässrigen Phase, die die Triebkraft der Umsetzung darstellt, und die Reaktionsgeschwindigkeit nimmt ab. In bevorzugten Ausführungsformen hält man daher die H₂O₂-Konzentration in der wässrigen Phase bei mindestens 45 %, vorzugsweise mindestens 48 %.

Man entfernt während der Umsetzung Wasser durch Azeotropdestillation. Hierzu enthält die organische Phase ein Schleppmittel, wie die oben genannten aliphatischen, alicyclischen oder aromatischen Kohlenwasserstoffe und/oder halogenierten Kohlenwasserstoffe. Das Schleppmittel dient dem Auskreisen von Wasser, und zwar sowohl eines Teils des mit der wässrigen Wasserstoffperoxidlösung eingebrachten Wassers als auch des Reaktionswassers. Das Schleppmittel bildet mit Wasser ein Azeotrop, ist aber in der Kälte mit Wasser nicht mischbar. Die wässrige Phase darf dabei nicht vollständig entfernt werden. Eine zu weitgehende Entfernung der wässrigen Phase führt zur verstärkten Bildung von Nebenprodukten.

Zur azeotropen Entfernung von Wasser verwendet man zweckmäßigerweise einen üblichen Wasserabscheider. Wasser geht mit den Brüden aus dem Reaktionsgemisch als Azeotrop mit dem Schleppmittel über und scheidet sich beim Abkühlen in Tropfen aus, die im Rohr des Wasserabscheiders nach unten sinken. Nach der Phasentrennung kann das Schleppmittel wieder in den Ansatz zurückgeführt werden. Da Persäuren in gewissem Umfang flüchtig sind, ist es möglich, dass dem System mit den Brüden auch Persäuren, z. B. Perameisensäure oder bei Mitverwendung von Essigsäure Peressigsäure, entzogen werden. Es kann sich daher empfehlen, das Schleppmittel vor dem Zurückführen durch die abgeschiedene wässrige Phase zu leiten, um die Persäuren aus der wässrigen Phase zu extrahieren. Hierzu ist beispielsweise ein Rotationsperforator geeignet.

Man kann einen ausreichend großen Überschuss an H₂O₂ und eine ausreichend konzentrierte Wasserstoffperoxidlösung verwenden, so dass auch am Ende der Umsetzung die H₂O₂-Konzentration in der wässrigen Phase nicht unter 45 % (nicht unter 48 %) fällt. Alternativ kann man Teile des Wassers durch Verwendung eines Carbonsäureanhydrids wie Essigsäureanhydrid binden.

Beim Arbeiten mit H₂O₂-Überschüssen ist es selbstverständlich wünschenswert, das nicht umgesetzten H₂O₂ rückzuführen und für die Reaktion verfügbar zu machen. Es ist daher bevorzugt, die wässrige Phase abzutrennen, gegebenenfalls aufzukonzentrieren und die aufkonzentrierte wässrige Phase erneut mit einer ein ethylenisch ungesättigtes Isobutenpolymer enthaltenden organischen Phase in Kontakt zu bringen. Der Begriff "Aufkonzentrieren" soll alle Maßnahmen umfassen, durch welche die H₂O₂-Konzentration in der wässrigen Phase erhöht wird. Bei einem bevorzugten Verfahren versetzt man die wässrige Phase mit einem Schleppmittel und entfernt Wasser durch Azeotropdestillation, bis die gewünschte H₂O₂-Konzentration erreicht ist. Die so behandelte wässrige Phase kann dann, gegebenenfalls nach Zusatz von frischem Wasserstoffperoxid, für Folgeansätze verwendet werden oder in den gleichen Ansatz rückgeführt werden.

Es ist auch denkbar, das Verfahren kontinuierlich durchzuführen und die organische Phase und die wässrige Phase im Gegenstrom zueinander durch eine längliche Reaktionszone zu führen, wobei man wässrige Phase und/oder die aufkonzentrierte wässrige Phase im oberen Bereich der Reaktionszone aufgibt und die organische Phase im unteren Bereich der Reaktionszone aufgibt. Eine an Wasserstoffperoxid bzw. Persäure verarmte wässrige Phase kann dann am unteren Ende der Reaktionszone abgezogen werden, die das epoxidierte Isobutenpolymer enthaltende organische Phase kann am oberen Ende abgezogen werden.

Man führt die Umsetzung im Allgemeinen bei einer Temperatur im Bereich von 40 bis 90 °C durch, vorzugsweise 45 bis 75 °C, insbesondere 50 bis 70 °C. Da die Reaktion exotherm verläuft, kann es nach dem Einsetzen der Reaktion erforderlich sein, das Reaktionsgemisch zu kühlen, um die Temperatur im angegebenen Bereich zu halten. Die Reaktionswärme kann auch ganz oder teilweise durch Siedekühlung abgeführt werden, d. h. durch partielle Verdampfung des verwendeten Lösungsmittels.

Um bei Verwendung eines höhersiedenden Lösungsmittels in dem angegebenen Temperaturbereich arbeiten zu können, kann es erforderlich sein, die Umsetzung bei vermindertem Druck durchzuführen. Geeignet ist z. B. das Arbeiten bei einem Druck im Bereich von 100 bis 600 mbar, vorzugsweise 200 bis 500 mbar absolut.

Es ist bevorzugt, dass die wässrige Phase außerdem wenigstens einen Mediator enthält. Der Mediator beschleunigt die erfindungsgemäße Umsetzung, vermutlich indem er die temporäre Bildung von Perameisensäure in der wässrigen Phase begünstigt und/oder den Übergang der temporär gebildete Perameisensäure in die organische Phase erleichtert und/oder die Löslichkeit der Perameisensäure in der wässrigen Phase verringert und/oder den Zerfall der Perameisensäure in der organischen Phase katalysiert und/oder die Umsetzung in anderer Weise begünstigt. Bevorzugte Mediatoren sind ausgewählt unter
a) von Ameisensäure verschiedenen Carbonsäuren,
b) Carbonsäureanhydriden,
c) Carbonsäuresalzen,
d) Carbonsäureestern,
e) Alkoholen,
f) Ethern.

Bevorzugt ist die gemeinsame Mitverwendung einer von Ameisensäure verschiedenen Carbonsäure und eines Carbonsäuresalzes; oder eines Carbonsäureanhydrids und eines Carbonsäuresalzes.

Die von Ameisensäure verschiedene Carbonsäure ist typischerweise eine C₂-C₂₂-Alkancarbonsäure, C₇-C₁₁-Arylcarbonsäure oder C₈-C₂₂-Aralkycarbonsäure, insbesondere eine C₂-C₄-Alkancarbonsäure. Die Arylreste können Substituenten tragen, z. B. ein, zwei oder drei Halogenatome, insbesondere Chlor, C₁-C₄-Alkylgruppen oder C₁-C₄-Alkoxygruppen. Geeignete Carbonsäuren sind Essigsäure, Propionsäure, Capronsäure, Benzoesäure, m-Chlorbenzoesäure und dergleichen. Essigsäure, Propionsäure und deren Gemischen sind besonders bevorzugt, wovon Essigsäure am meisten bevorzugt ist. Ameisensäure und die von Ameisensäure verschieden Carbonsäure werden typischerweise in einem Gewichtsverhältnis von 10:1 bis 1:10, besonders 1:1 bis 1:5 eingesetzt.

Bei dem Carbonsäureanhydrid handelt es sich typischerweise um das Anhydrid einer C₂-C₂₂-Alkancarbonsäure, C₇-C₁₁-Arylcarbonsäure oder C₈-C₂₂-Aralkycarbonsäure, insbesondere einer C₂-C₄-Alkancarbonsäure. Essigsäureanhydrid ist am meisten bevorzugt. Ameisensäure und Essigsäureanhydrid werden typischerweise in einem Gewichtsverhältnis von 10:1 bis 1:10, besonders 1:1 bis 1:5 eingesetzt.

Bei dem Carbonsäuresalz handelt es sich typischerweise um ein Alkalimetall- oder Erdalkalimetallsalz einer C₁-C₂₂-Alkancarbonsäure, C₇-C₁₁-Arylcarbonsäure oder C₈-C₂₂-Aralkycarbonsäure, insbesondere einer C₁-C₄-Alkancarbonsäure. Natriumformiat, Natriumacetat sind am meisten bevorzugt. Es wird typischerweise in einer Menge von 2-20 Gew-% bezogen auf die Menge H₂O₂ eingesetzt.

Bei dem Carbonsäureester handelt es sich typischerweise um einen C₁-C₈-Alkylether einer C₁-C₂₂-Alkancarbonsäure, C₇-C₁₁-Arylcarbonsäure oder C₈-C₂₂-Aralkylcarbonsäure, insbesondere einer C₁-C₄-Alkancarbonsäure. Essigsäureethylester ist am meisten bevorzugt. Sofern verwendet, wird der Ester typischerweise in einer Menge von 2 bis 20 Vol.-%, insbesondere 5 bis 10 Vol.-%, bezogen auf die Gesamtheit von wässriger und organischer Phase eingesetzt.

Bei dem Alkohol handelt es sich vorzugsweise um einen C₁-C₈-Alkohol wie Ethanol, 1-Propanol, 2-Propanol. Sofern verwendet, wird der Alkohol typischerweise in einer Menge von 2 bis 20 Vol.-%, insbesondere 5 bis 10 Vol.-%, bezogen auf die Gesamtheit von wässriger und organischer Phase eingesetzt.

Die Ether können symmetrische oder unsymmetrische Di-C₁-C₈-alkylether oder cyclische Ether sein, wie Tetrahydrofuran oder Dioxan. Sofern verwendet, wird der Ether typischerweise in einer Menge von 2 bis 20 Vol.-%, insbesondere 5 bis 10 Vol.-%, bezogen auf die Gesamtheit von wässriger und organischer Phase eingesetzt.

Die Mitverwendung katalytischer Mengen einer Mineralsäure, wie Schwefelsäure oder Phosphorsäure, oder einer Sulfonsäure, wie Methansulfonsäure oder Toluolsulfonsäure, als saurer Katalysator ist möglich, aber nicht bevorzugt.

Das gebildete Epoxid ist in der Regel eine viskose Flüssigkeit, die durch Abtrennen der wässrigen Phase und Abdampfen des Schleppmittels isoliert werden kann. Vorzugsweise wäscht man die organische Phase nach dem Abtrennen der wässrigen Phase. Die wässrige Phase und die Waschwässer können, gegebenenfalls nach Aufkonzentrierung und/oder anderen Behandlungen, für Folgeansätze verwendet werden. Für eine schnellere Phasentrennung kann man insbesondere bei höheren Molekulargewichten des Isobutenpolymers weitere Lösungsmittelmengen zusetzen.

Der Epoxidationsgrad beträgt in der Regel mehr als 90 %. Das nach dem erfindungsgemäßen Verfahren erhaltene epoxidierte Isobutenpolymer wird in der Regel ohne weitere Reinigung verwendet.

### Isobutenpolymere

Die Isobutenpolymere, die als Ausgangsmaterial für das erfindungsgemäße Verfahren in Betracht kommen, umfassen im Allgemeinen wenigstens 50 Gew.-% Isobuteneinheiten, vorzugsweise wenigstens 80 Gew.-% Isobuteneinheiten, insbesondere wenigstens 95 Gew.-% Isobuteneinheiten. Neben Isobuteneinheiten kann das Isobutenpolymer auch Einheiten von olefinisch ungesättigten Monomeren, welche mit Isobuten unter kationischen Polymerisationsbedingungen copolymerisierbar sind, enthalten. Die Comonomere können statistisch im Polymer verteilt oder als Blöcke angeordnet sein Als copolymerisierbare Monomere kommen vor allem Vinylaromaten wie Styrol, C₁-C₄-Alkylstyrole wie α-Methylstyrol, 3- und 4-Methylstyrol, oder 4-tert-Butylstyrol, sowie Isoolefine mit 5 bis 10 C-Atomen wie 2-Methylbuten-1, 2-Methylpenten-1, 2-Methylhexen-1, 2-Ethylpenten-1, 2-Ethylhexen-1 und 2-Propylhepten-1 in Betracht.

Das Isobutenpolymer weist im Allgemeinen ein zahlenmittleres Molekulargewicht von 500 bis 50000, vorzugsweise 1000 bis 10000, insbesondere 1500 bis 5000 auf.

Bei der olefinisch ungesättigten Gruppe kann es sich z. B. um aliphatische ungesättigte Gruppen mit 2 bis 6 Kohlenstoffatomen wie Vinyl, Allyl, Methylvinyl, Methallyl, Propenyl, 2-Methytpropenyl, Butenyl, Pentenyl, Hexenyl; oder cylische ungesättigte Kohlenwasserstoffreste wie Cyclopropenyl, Cyclobutenyl, Cyclopentenyl und Cylohexenyl, handeln. Bevorzugt sind Isobutenpolymere mit terminalen Allyl-, Methallyl-, 2-Methylpropenyl- oder Cyclopentenylgruppen.

In einer Ausführungsform handelt es sich bei dem Isobutenpolymer um hochreaktives Polyisobuten. Die so genannten hochreaktiven Polyisobutene sind Polyisobutene mit einem hohen Gehalt an Methylidengruppen, in der Regel von mehr als 75 Mol-%. Unter Methylidengruppen werden solche Doppelbindungen verstanden, deren Lage im Polyisobutenmakromolekül durch die allgemeine Formel 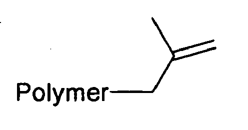 beschrieben wird, in der "Polymer" für den um eine Isobuteneinheit verkürzten Polyisobutenrest steht.

Hochreaktive Polyisobutene können durch Polymerisation von Isobuten unter Bortrifluorid-Katalyse erhalten werden. Die EP 322 241 beschreibt ein Verfahren zur Herstellung hochreaktiver Polyisobutene, bei dem man Isobuten in Gegenwart von Bortrifluorid und eines Cokatalysators polymerisiert und das Polymierisationsprodukt unverzüglich quencht.

Geeignete Polyisobutene sind handelsüblich und in verschiedenen Molekulargewichten z. B. unter der Bezeichnung Glissopal® von der BASF Aktiengesellschaft erhältlich.

In besonders bevorzugten Ausführungsformen weist das Isobutenpolymer durchschnittlich wenigstens 1,4, vorzugsweise wenigstens 1,8, olefinische Doppelbindungen pro Molekül auf. Es handelt sich um lineare Moleküle, die im Wesentlichen an beiden Molekülenden olefinische Doppelbindungen aufweisen, oder sternförmige Polymere, die an den Molekülenden olefinische Doppelbindungen aufweisen.

Derartige Isobutenpolymere können nach Verfahren hergestellt werden, die in den US 4,946,899 US 4,327,201, US 5,169,914, EP-A-206 756, EP-A-265 053 sowie umfassend in J.P. Kennedy, B. Ivan, "Designed Polymers by Carbocationic Macromolecular Engineering", Oxford University Press, New York, 1991. beschrieben sind. Die Isobutenpolymere werden durch lebende kationische Polymerisation von Isobuten hergestellt. Das eingesetzte Initiatorsystem umfasst in der Regel eine Lewis-Säure und einen "Initiator", d. h. eine organische Verbindung mit einer leicht substituierbaren Abgangsgruppe, die mit der Lewis-Säure ein Carbokation oder einen kationogenen Komplex bildet. Der Initiator ist in der Regel ein tertiäres Halogenid, ein tertiärer Ester oder Ether oder eine Verbindung mit allyl-ständigem Halogenatom, allylständiger Alkoxy- oder Acyloxygruppe. Das Carbokation oder der kationogene Komplex addieren sukzessive Isobutenmoleküle an das kationische Zentrum, wodurch sich eine wachsende Polymerkette ausbildet, deren Ende durch ein Carbokation oder die Abgangsgruppe des Initiators terminiert ist. Der Initiator kann mono- oder höherfunktionell sein, wobei im letzteren Fall Polymerketten in mehr als eine Richtung wachsen.

Isobutenpolymere mit terminaler Doppelbindung können auf verschiedene Weise erhalten werden. Man kann von olefinisch ungesättigten Inifermolekülen ausgehen. Um Polyisobutenmoleküle mit mehr als einer terminalen Doppelbindung pro Molekül zu erhalten, kann man am distalen Kettenende ebenfalls eine olefinische Doppelbindung einführen oder zwei oder mehr lebende Polymerketten koppeln. Beide Möglichkeiten sind nachstehend näher erläutert.

Alternativ geht man von Initiatormolekülen ohne olefinische Doppelbindung aus und terminiert die distalen Kettenenden unter Ausbildung einer ethylenisch ungesättigten Gruppe, wobei man z. B. die reaktiven Kettenenden mit einem Terminierungsreagenz umsetzt, das an die Kettenenden eine ethylenisch ungesättigte Gruppe anfügt, oder geeignet behandelt, um die reaktiven Kettenende in solche Gruppen umzuwandeln.

Bevorzugt sind solche Initiatoren, worin die funktionelle Gruppe die allgemeine Formel FG 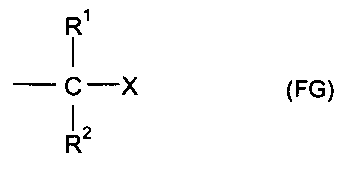 aufweist, worin
- X: ausgewählt ist unter Halogen, C₁-C₆-Alkoxy und C₁-C₆-Acyloxy,
- R¹: Wasserstoff oder Methyl bedeutet und
- R²: für Methyl steht, oder mit R¹ oder dem Molekülteil an den die funktionelle Gruppe FG gebunden ist, einen C₅-C₆-Cycloalkylring bildet, R² auch Wasserstoff bedeuten kann, wenn die funktionelle Gruppe FG an ein aromatisches oder olefinisch ungesättigtes C-Atom gebunden ist.

Die Initiatoren weisen vorzugsweise eine, zwei, drei oder vier, insbesondere eine oder zwei, und besonders bevorzugt zwei funktionelle Gruppen FG auf. Bevorzugt steht X in Formel (FG) für ein Halogenatom, insbesondere für Chlor.

### Bevorzugte Initiatoren gehorchen beispielsweise den allgemeinen Formeln I-A bis I-F:

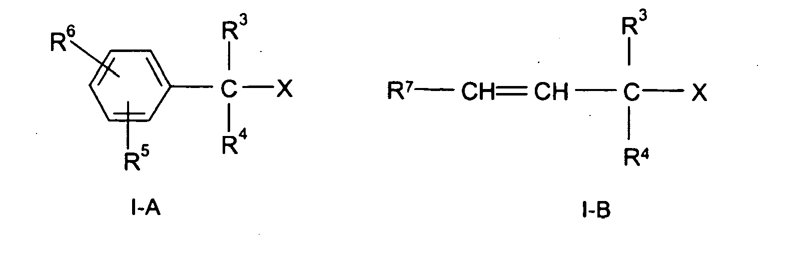

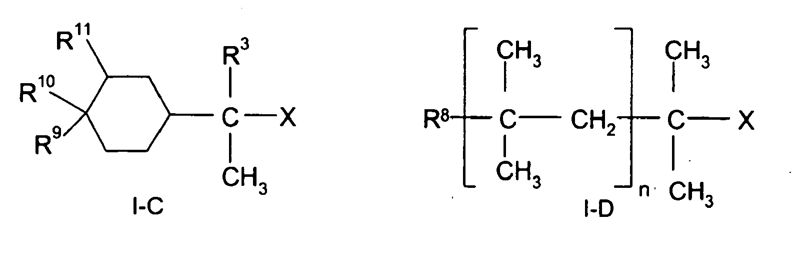

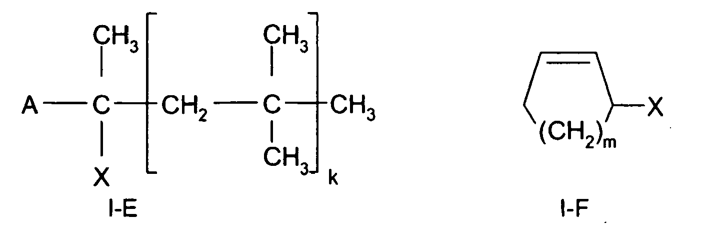

worin X die zuvor genannte Bedeutung hat;
- n und k: unabhängig voneinander für 0, 1, 2, 3, 4 oder 5 stehen;
- m: für 1, 2 oder 3 steht;
- R³, R⁴ und R¹⁰: unabhängig voneinander für Wasserstoff oder Methyl stehen;
- R⁵, R⁶ und R⁷: unabhängig voneinander für Wasserstoff, C₁-C₄-Alkyl oder eine Gruppe CR³R⁴-X, stehen, worin R³, R⁴ und X die zuvor genannten Bedeutungen haben; und
- R⁸: für Wasserstoff, Methyl oder ein Gruppe X steht; und
- R⁹ und R¹¹: Wasserstoff oder eine Gruppe X bedeuten; und
- A: für einen ethylenisch ungesättigten Kohlenwasserstoffrest steht, der eine Vinylgruppe oder eine Cycloalkenylgruppe aufweist.

In den Formeln I-A bis I-C stehen R³ und R⁴ vorzugsweise beide für Methyl. In der Formel I-A steht R⁶ beispielsweise für eine Gruppe CR³R⁴-X, die in para- oder meta-Position zur CR³R⁴X-Gruppe angeordnet ist, insbesondere wenn R⁵ Wasserstoff bedeutet. Sie kann sich auch in der meta-Position befinden, wenn die Gruppe R⁵ für C₁-C₄-Alkyl oder eine Gruppe CR³R⁴-X steht. Bevorzugte Verbindungen I-A sind z. B.: 2-Chlor-2-phenylpropan sowie 1,4-Bis(2-chlor-2-propyl)benzol (1,4-Dicumylchlorid, 1,4-DCC) oder 1,3-Bis(2-chlor-2-propyl)benzol (1,3-Dicumylchlorid, 1,3-DCC).

Beispiele für Verbindungen der Formel I-B sind Allylchlorid, Methallylchlorid, 2-Chlor-2-methylbuten-2 sowie 2,5-Dichlor-2,5-dimethylhexen-3.

In den Verbindungen I-C steht R³ vorzugsweise für Methyl. R⁹ steht vorzugsweise für eine Gruppe X, und insbesondere für Halogen, insbesondere, wenn R¹⁰ für Methyl steht. Beispiele für Verbindungen der allgemeinen Formel I-C sind 1,8-Dichlor-4-p-menthan (Limonendihydrochlorid), 1,8-Dibrom-4-p-menthan (Limonendihydrobromid), 1-(1-Chlorethyl-3-chlorcyclohexan, 1-(1-Chlorethyl-4-chlorcyclohexan, 1-(1-Bromethyl)-3-bromcyclohexan und 1-(1-Bromethyl)-4-bromcyclohexan.

Unter den Verbindungen der Formel I-D sind solche bevorzugt, in denen R⁸ für eine Methylgruppe steht. Bevorzugt sind außerdem Verbindungen der allgemeinen Formel I-D, in denen R⁸ für eine Gruppe X, und insbesondere ein Halogen-Atom, steht, wenn n > 0 ist.

In Verbindungen I-E steht A für einen Kohlenwasserstoffrest mit in der Regel 2 bis 21 C-Atomen, der entweder eine Vinylgruppe(CH₂=CH-) oder einen C₅-C₈-Cycloalkenylrest, z. B. Cyclopenten-3-yl, Cyclopenten-4-yl, Cyclohexen-3-yl, Cyclohexen-4-yl, Cyclohepten-3-yl, Cyclohepten-4-yl, Cycloocten-3-yl, Cycloocten-4-yl oder Cycloocten-5-yl, aufweist.

### Vorzugsweise steht A für einen Rest der Formeln A.1, A.2 oder A.3

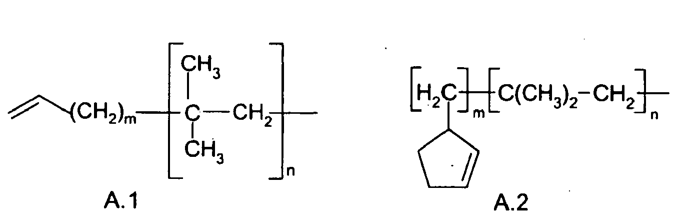

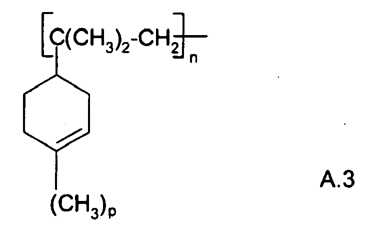

worin
- m: für 0 oder 1 steht;
- n: für eine Zahl von 0 bis 3, insbesondere 0, 1 oder 2 steht, und
- p: für 0 oder 1 steht.

In Verbindungen I mit A = A.2 steht m vorzugsweise für 1.

In Verbindungen I mit A = A.3 steht n vorzugsweise für 0. p steht vorzugsweise für 1.

Beispiele für Initiator-Verbindungen I sind:
2-Chlor-2-methylbuten-3, 2-Chlor-2-methylpenten-4, 2-Chlor-2,4,4-trimethylhexen-5, 2-Chlor-2-methyl-3-(cyclopenten-3-yl)propan, 2-Chlor-2-methyl-4-(cyclohexen-4-yl)pentan und 2-Chlor-2-(1-methylcyclohexen-4-yl)propen.

In Verbindungen der Formel I-F steht X vorzugsweise für Chlor. m steht vorzugsweise für 1 oder 2 und besonders bevorzugt für 1. Eine bevorzugte Verbindung der Formel I-F ist 3-Chlorcyclopenten.

Besonders bevorzugt verwendet man als Initiatoren Verbindungen der Formel I-A und insbesondere 1,4-Bis(2-chlor-2-propyl)benzol (1,4-Dicumylchlorid, 1,4-DCC) oder 1,3-Bis(2-chlor-2-propyl)benzol (1,3-Dicumylchlorid, 1,3-DCC), wobei 1,4-Dicumylchlorid besonders bevorzugt ist.

Die oben beschriebenen Initiatoren sowie Verfahren zu ihrer Herstellung sind bekannt und beispielsweise in der WO 02/48215, WO 03/074577 sowie in der DE-A-10328854 beschrieben.

Als Lewis-Säure kommen kovalente Metallhalogenide und Halbmetallhalogenide, die eine Elektronenpaarlücke aufweisen, in Betracht. Derartige Verbindungen sind dem Fachmann bekannt, beispielsweise aus J.P. Kennedy et al. in US 4,946,899, US 4,327,201, US 5,169,914, EP-A-206 756, EP-A-265 053 sowie umfassend in J.P. Kennedy, B. Ivan, "Designed Polymers by Carbocationic Macromolecular Engineering", Oxford University Press, New York, 1991. Sie sind in der Regel ausgewählt unter Halogen-Verbindungen des Titans, des Zinns, des Aluminiums, des Vanadiums oder des Eisens, sowie den Halogeniden des Bors. Bevorzugt sind die Chloride, und im Falle des Aluminiums auch die Monoalkylaluminiumdichloride und die Dialkylaluminiumchloride. Bevorzugte Lewis-Säuren sind Titantetrachlorid, Bortrichlorid, Bortrifluorid, Zinntetrachlorid, Aluminiumtrichlorid, Vanadiumpentachlorid, Eisentrichlorid, Alkylaluminiumdichloride und Dialkylaluminiumchloride. Besonders bevorzugte Lewis-Säuren sind Titantetrachlorid, Bortrichlorid und Ethylaluminiumdichlorid und insbesondere Titantetrachlorid. Alternativ kann auch ein Gemisch aus wenigstens zwei Lewis-Säuren eingesetzt werden, beispielsweise Bortrichlorid im Gemisch mit Titantetrachlorid.

Es hat sich bewährt, die Polymerisation in Gegenwart eines Elektronendonors durchzuführen. Als Donoren sind Pyridin und sterisch gehinderte Pyridin-Derivate sowie insbesondere siliziumorganische Verbindungen bevorzugt.

Die Polymerisation wird üblicherweise in einem Lösungsmittel oder Lösungsmittelgemisch durchgeführt, wie aliphatischen Kohlenwasserstoffen, aromatischen Kohlenwasserstoffen sowie halogenierten Kohlenwasserstoffen. Besonders bewährt haben sich Gemische aliphatischer, cycloaliphatischer oder aromatischer Kohlenwasserstoffe mit halogenierten Kohlenwasserstoffen, wie Dichlormethan/n-Hexan, Dichlormethan/Methylcyclohexan, Dichlormethan/Toluol, Chlormethan/n-Hexan, 1-Chlorbutan/Hexan, 1-Chlorbutan/Toluol und dergleichen.

Um am distalen Kettenende eine olefinische Doppelbindung einzuführen, setzt man das reaktive Kettenende mit einem Terminierungsreagenz um, das an das Kettenende eine olefinisch ungesättigte Gruppe anfügt, oder behandelt das reaktive Kettenende geeignet, um es in eine solche Gruppe umzuwandeln.

In der einfachsten Ausführungsform wird das Kettenende einer Dehydrohalogenierungsreaktion unterworfen, z. B. durch thermische Behandlung, beispielsweise durch Erwärmen auf eine Temperatur von 70 bis 200 °C, oder durch Behandlung mit einer Base. Geeignete Basen sind z. B. Alkalimetallalkoxide, wie Natriummethanolat, Natriumethanolat und Kalium-tert-Butanolat, basisches Aluminiumoxid, Alkalimetallhydroxide, wie Natriumhydroxid, und tertiäre Amine, wie Pyridin oder Tributylamin, vgl. Kennedy et al., Polymer Bulletin 1985, 13, 435-439. Bevorzugt wird Natriumethanolat verwendet.

Alternativ wird das Kettenende durch Zugabe einer Trialkylallylsilanverbindung, z. B. Trimethylallylsilan, terminiert. Die Verwendung der Allylsilane führt zum Abbruch der Polymerisation unter Einführung eines Allylrestes am Polymerkettenende, vgl. EP 264 214.

In einer weiteren Ausführungsform wird das reaktive Kettenende mit einem konjugierten Dien, wie Butadien (vgl. DE-A 40 25 961) oder einem nicht konjugierten Dien wie 1,9-Decadien oder einem Alkenyloxystyrol wie p-Hexenyloxystyrol (vgl. JP-A-4-288309) umgesetzt.

In einer weiteren Ausführungsform werden durch Zusatz eines Kopplungsmittels zwei oder mehrere lebende Polymerketten gekoppelt. "Kopplung" bedeutet die Ausbildung von chemischen Bindungen zwischen den reaktiven Kettenenden, so dass zwei oder mehrere Polymerketten zu einem Molekül verbunden werden. Die durch Kopplung erhaltenen Moleküle sind symmetrische telechele oder sternförmige Moleküle mit Gruppen des Initiators, z. B. Cyclopentenylgruppen, an den Molekülenden bzw. den Enden der Äste des sternförmigen Moleküls.

Geeignete Kopplungsmittel weisen beispielsweise wenigstens zwei allylständig zur gleichen oder verschiedenen Doppelbindungen angeordnete elektrofuge Abgangsgruppen, z. B. Trialkylsilylgruppen, auf, so dass sich das kationische Zentrum eines reaktiven Kettenendes in einer konzertierten Reaktion unter Abspaltung der Austrittsgruppe und Verschiebung der Doppelbindung anlagern kann. Andere Kopplungsmittel weisen wenigstens ein konjugiertes System auf, an das sich das kationische Zentrum eines reaktiven Kettenendes unter Ausbildung eines stabilisierten Kations elektrophil addieren kann. Durch Abspaltung einer Austrittsgruppe, z. B. eines Protons, entsteht dann unter Rückbildung des konjugierten Systems eine stabile σ-Bindung zu der Polymerkette. Mehrere dieser konjugierten Systeme können durch inerte Spacer miteinander verbunden sein.

Zu den geeigneten Kopplungsmitteln zählen:
(i) Verbindungen, die wenigstens zwei 5-gliedrige Heterocyclen mit einem unter Sauerstoff, Schwefel und Stickstoff ausgewählten Heteroatom aufweisen, z. B. organische Verbindungen, die wenigstens zwei Furanringe aufweisen, wie 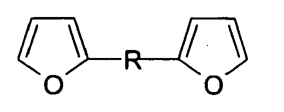 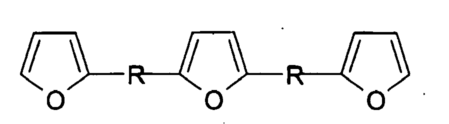 worin R für C₁-C₁₀-Alkylen steht, vorzugsweise Methylen oder 2,2-Propandiyl;
(ii) Verbindungen mit wenigstens zwei allylständigen Trialkylsilylgruppen, wie 1,1-Bis(trialkylsilylmethyl)ethylene, z. B. 1,1-Bis(trimethylsilylmethyl)ethylen,
   Bis[(trialkylsilyl)-propenyl]benzole z. B. 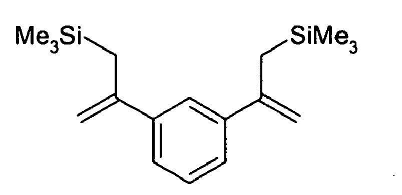 (worin Me für Methyl steht),
(iii) Verbindungen mit wenigstens zwei konjugiert zu jeweils zwei aromatischen Ringen angeordneten Vinylidengruppen, wie Bis-diphenylethylene z. B. 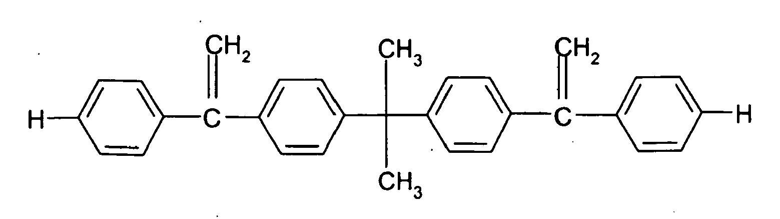 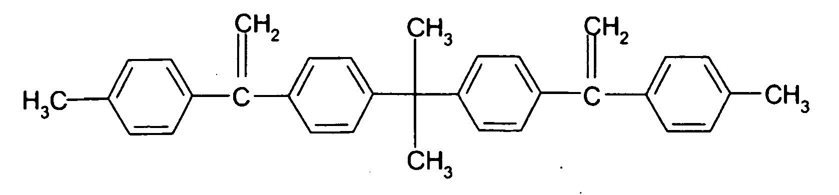
   Eine Beschreibung geeigneter Kopplungsmittel findet sich in folgenden Literaturstellen; die Kopplungsreaktion kann in analoger Weise zu den dort beschriebenen Umsetzungen durchgeführt werden: R. Faust, S. Hadjikyriacou, Macromolecules 2000, 33, 730-733; R. Faust, S. Hadjikyriacou, Macromolecules 1999, 32, 6393-6399; R. Faust, S. Hadjikyriacou, Polym. Bull. 1999, 43, 121-128; R. Faust, Y. Bae, Macromolecules 1997, 30, 198; R. Faust, Y. Bae, Macromolecules 1998, 31, 2480; R. Storey, Maggio, Polymer Preprints 1998, 39, 327-328; WO99/24480; US 5,690,861 und US 5,981,785.

Die Kopplung erfolgt in der Regel in Gegenwart einer Lewis-Säure, wobei sich solche Lewis-Säuren eignen, die auch zur Durchführung der eigentlichen Polymerisationsreaktion verwendbar sind. Zur Durchführung der Kopplungsreaktion sind außerdem auch die gleichen Lösungsmittel und Temperaturen geeignet, wie man sie zur Durchführung der eigentlichen Polymerisationsreaktion einsetzt. Zweckmäßigerweise kann man die Kopplung daher als Eintopfreaktion im Anschluss an die Polymerisationsreaktion im gleichen Lösungsmittel in Gegenwart der zur Polymerisation eingesetzten Lewis-Säure durchführen.

### Folgeumsetzungen

Das nach dem erfindungsgemäßen Verfahren erhaltene Epoxid kann auf verschiedene Weise weiter umgesetzt werden.

Das Epoxid kann mit z. B. Thiolen oder primären oder sekundären Aminen umgesetzt werden, wobei man u.a. Glycolthioether und Amine erhält.

Durch Umsetzung eines Isobutenpolymers, das durchschnittlich wenigstens 1,4, vorzugsweise wenigstens 1,8, Epoxygruppen pro Molekül aufweist, mit Polyolen oder insbesondere Polythiolen, wie Trimethylolpropan-tris(3-mercaptopropionat) oder Pentaerythritol-tetrakis(3-mercaptopropionat), oder Polyaminen, wie Diethylentriamin, erhält man Netzwerke, die aufgrund ihrer elastischen und dämpfenden Eigenschaften vorteilhaft sind.

In einer bevorzugten Folgereaktion lagert man das Epoxid zum Aldehyd um, was beispielsweise unter Katalyse mittels Alumosilikaten, z. B. Zeolithen, saurem Aluminiumoxid, Lewissäuren, wie Aluminium- oder Zinksalzen, z. B. Zinkbromid, oder Protonensäuren, wie Schwefelsäure, erfolgen kann. Der Aldehyd ist seinerseits ein vielseitiges Ausgangsmaterial für wertvolle Produkte. Die Umwandlung von Polyisobutenylepoxiden in Aldehyde ist z.B. in der WO 90/10022 und der US 6,303,703 oder Organikum, 20. Aufl. 1999, Wiley-VCH, S. 615, beschrieben.

Man kann den Aldehyd in eine schiff'sche Base oder ein Enamin umwandeln und die schiff'sche Base oder das Enamin zum Amin reduzieren.

So kann man den Aldehyd mit Ammoniak oder einem primären Amin in ein Imin umwandeln und das Imin zum Amin reduzieren, insbesondere katalytisch hydrieren. Geeignete primäre Amine sind z.B. Diethylentriamin, Di(methylethylen)triamin, Triethylentetramin, Tri(methylethylen)tetramin, Tri(ethylethylen)tetramin, Tetraethylenpentamin, Pentaethylenhexamin, Ethylendiamin, Hexamethylendiamin, o-Phenylendiamin, m-Phenylendiamin, p-Phenylendiamin, alkyl-substituiertes o-, m- und p-Phenylendiamin, Dimethylaminomethylamin, Dimethylaminoethylamin, Dimethylaminopropylamin, Dimethylaminobutylamin, Dimethylaminoheptylamin, Diethylaminomethylamin, Diethylaminopropylamine, Diethylaminoamylamin, Dipropylaminopropylamin, Methylpropylaminoamylamin, Propylbutylaminoethylamin, Dimethylentrianilin, Methylendianilin, Polymethylenanilin und Polyalkylmethylenanilin. Die Umsetzung des Aldehyds mit dem primären Amin und die Hydrierung des erhaltenen Imins zu einem Polyisobutenylamin ist in der WO 90/10022 beschrieben.

Man kann den Aldehyd auch in ein Oxim umwandeln und das Oxim zum Amin reduzieren. Zweckmäßigerweise setzt man Hydroxylamin ein, das man durch Neutralisieren eines Hydroxylamoniumsalzes erhält. Das Hydroxylamin reagiert mit dem Aldehyd zum Oxim. Man reduziert das Oxim dann durch katalytische Hydrierung zum Amin. Die Hydrierung erfolgt bei geeigneter Temperatur und Druck in Gegenwart eines Hydrierkatalysators. Geeignee Katalysatoren sind z. B. Raney-Nickel, Nickel auf Kieselgur, Kupferchromit, Platin auf Kohle, Palladium auf Kohle und dergleichen. Die Umsetzung ist z.B. in der US 6,303,703 beschrieben.

In einer weiteren bevorzugten Ausführungsform wandelt man den Aldehyd in einer Leuckart-Reaktion in ein Formamid um. Zur Durchführung der Leuckart-Reaktion sind verschiedene Reagenzien geeignet; Ammoniumformiat ist bevorzugt. Das Formamid kann dann durch Hydrolyse in ein Amin umgewandelt werden. Die Hydrolyse kann geeigneterweise mit verdünnter Salzsäure bei mäßig erhöhter Temperatur durchgeführt werden. Vorzugsweise verwendet man dabei einen Phasentransferkatalysator wie Tricaprylymethylammoniumnitrat. Die Umsetzung ist z.B. in der US 6,303,703 beschrieben.

In einer weiteren bevorzugten Ausführungsform wandelt man den Aldehyd in einen Alkohol um.

Das Epoxid kann des Weiteren durch Umsetzung mit einem Boran und anschließende oxidative Spaltung des gebildeten Esters zu einem 2-Polyisobutenyl-1,3-propandiol umgesetzt werden, wie nachstehend veranschaulicht.

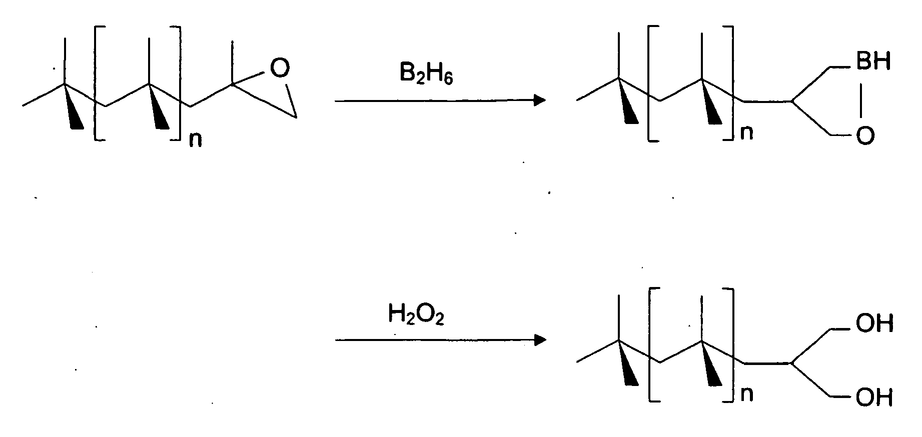

Geeignete Borane sind z.B. Diboran (B₂H₆) sowie Alkyl- und Arylborane RBH₂ (R = Alkyl oder Aryl). Dem Fachmann ist geläufig, dass derartige Borane auch in situ aus einem Borhydrid und einer Säure, meist BF₃-Etherat, hergestellt werden können. Die Umsetzung mit dem Boran erfolgt geeigneterweise in einem Boran-koordinierenden Lösungsmittel. Beispiele hierfür sind offenkettige Ether, wie Dialkyl-, Diaryl- oder Alkylarylether, sowie cyclische Ether, wie Tetrahydrofuran oder 1,4-Dioxan, aber auch Lösungsmittel wie Toluol, Cyclohexan und Methylenchlorid sind geeignet. Die oxidative Spaltung zum 1,3-Diol kann beispielsweise mittels Wasserstoffperoxid in Gegenwart einer Base unter Erwärmen auf z. B. 50 bis 75 °C erfolgen. Geeignete Lösungsmittel hierfür sind Ether oder Gemische von Ethern und Kohlenwasserstoffen.

Die Überführung des Epoxids in ein 2-Polyisobutenyl-1,3-propandiol ist z.B. in EP-A-0737662 beschrieben.

### Netzwerke

Isobutenpolymere mit Isocyanat-reaktiven Gruppen, wie Hydroxylgruppen, Mercaptogruppen oder Aminogruppen, können mit Isocyanat-Vernetzungsmitteln zu Netzwerken umgesetzt werden. Terminale Aminogruppen können mit Phosgen in Isocyanatgruppen umgewandelt werden, die mit nicht umgesetzten Aminogruppen reagieren können

Bei dem Vernetzungsmittel handelt es sich z. B. um ein di- oder höherfunktionelles Isocyanat, das vorzugsweise unter Diisocyanaten, den Biurethen und Cyanuraten von Diisocyanaten sowie den Addukten von Diisocyanaten an Polyole ausgewählt ist. Geeignete Diisocyanate weisen in der Regel 4 bis 22 C-Atome auf. Die Diisocyanate sind üblicherweise ausgewählt unter aliphatischen, cyclo-aliphatischen und aromatischen Diisocyanaten, z. B. 1,4-Diisocyanatobutan, 1,6-Diisocyanatohexan, 1,6-DIIsocyanato-2,2,4-trimethylhexan, 1,6-Diisocyanato-2,4,4-trimethylhexan, 1,2-, 1,3- und 1,4-Diisocyanatocyclohexan, 2,4-und 2,6-Diisocyanato-1-methylcyclohexan, 4,4'-Bis(isocyanatocyclohexyl)methan, Isophorondiisocyanat (= 1-Isocyanato-3,3,5-trimethyl-5-isocyanatomethylcyclohexan), 2,4- und 2,6-Toluylendiisocyanat, Tetramethylen-p-xylylendiisocyanat (= 1,4-Bis(2-isocyanatoprop-2-yl)benzol), 4,4'-Diisocyanatodiphenylmethan, vorzugsweise 1,6-Diisocyanatohexan und Isophorondiisocyanat, und Mischungen davon. Bevorzugte Verbindungen umfassen die Cyanurate und Biurete aliphatischer Diisocyanate, insbesondere die Cyanurate. Besonders bevorzugte Verbindungen sind das Isocyanurat und das Biuret des Isophorondiisocyanats und das Isocyanurat und das Biuret des 1,6-Diisocyanatohexans. Beispiele für Addukte von Diisocyanaten an Polyole sind die Addukte der oben genannten Diisocyanate an Glycerin, Trimethylolethan und Trimethylolpropan, z. B. das Addukt von Toluylendiisocyanaten an Trimethylolpropan, oder die Addukte von 1,6-Diisocyanatohexan oder Isophorondiisocyanat an Trimethylpropan und/oder Glycerin.

Zur Beschleunigung der Umsetzung zwischen den Isocyanat-reaktiven Gruppen des Isobutenpolymers und den Isocyanatgruppen des Vernetzungsmittels können bekannte Katalysatoren, wie z. B. Dibutylzinndilaurat, Zinn-(II)-octoat, 1,4-Diazabicyclo[2.2.2]-octan oder Amine, wie Triethylamin, eingesetzt werden. Diese werden typischerweise in einer Menge von 10⁻⁵ bis 10⁻² g, bezogen auf des Gewicht des Vernetzungsmittels, eingesetzt.

Die Vernetzungsdichte kann durch Variation der Funktionalität des Polyisocyanats, des molaren Verhältnisses des Polyisocyanats zum Hydroxyl-terminierten Isobutenpolymer, oder durch Mitverwendung monofunktioneller, gegenüber Isocyanatgruppen reaktiver Verbindungen, wie einwertiger Alkohole, z. B. Ethylhexanol oder Propylheptanol, gesteuert werden.

Die Erfindung wird durch die folgenden Beispiele näher veranschaulicht.

### Beispiel 1: Herstellung von Polyisobuten

In einem 1I-Vierhalskolben, auf den ein Tropftrichter mit Druckausgleich und einem Trockeneiskühler und Trockenrohr aufgesetzt war, legte man 1-Chlorbutan (440 ml) und als Indikator Phenanthrolin (20 mg) vor. Dann kondensierte man Isobuten (560 ml) in den Tropftrichter und entleerte den Inhalt des Tropftrichters in den Kolben. Mit einer Spritze versetzte man das Gemisch mit einer Lösung von Butyllithium in Hexan (1 M, etwa 10 ml), bis eine bleibenden Braunfärbung auftrat.

In einem zweiten 1I-Vierhalskolben, auf den ein Tropftrichter mit Druckausgleich und einem Trockeneiskühler und Trockenrohr aufgesetzt war und der mit dem ersten Kolben über eine absperrbare Schlauchverbindung verbunden war, legte man 1,3-Dicumylchlorid (43,6 g) vor. Man erwärmte den Inhalt des ersten Kolbens unter leichzeitiger Kühlung des zweiten Kolbens, so dass der Inhalt des ersten Kolbens in den zweiten Kolben überdestilliert.

Unter Rühren setzte man im zweiten Kolben Phenyltriethoxysilan (1,44 g) über eine Spritze zu und kühlte mit Aceton/Trockeneis auf -76 °C. Dann setzte man TiCl₄ (2,0 ml) über eine Spritze zu und nach einer Reaktionszeit von 30 min Acetonitril (2 g).

Man filtrierte den entstandenen braunen Niederschlag ab, schwenkte das Filtrat 10 min über Aluminiumoxid (Kugeln mit 2-3 mm Durchmesser; 100 g). Man zog das Lösungsmittel bei Raumtemperatur im Vakuum ab.

Das Molekulargewicht Mn des erhaltenen Polymers betrug 2227 (GPC-Bestimmung), die Dispersität 1,40. Der durchschnittliche Gehalt an Chloratomen pro Polyisobutenmolekül betrug 1,9 (Bestimmung mit ¹H-NMR).

100 g des so erhaltenen Polymers wurden in 100 ml Tetrahydrofuran gelöst und mit 10 g Kalium-tert-butylat unter Rückfluss zum Sieden erhitzt. Dann versetzte man mit je 200 ml Heptan, Isopropanol und Wasser, mischte und trennte nach 10 min die wässrige Phase ab. Man wusch die organische Phase zweimal mit 200 ml gesättigter Kochsalzlösung, trocknete über Natriumsulfat und engte zur Trockene ein.

Im ¹H-NMR stellte man 98 % Olefingruppen fest (olefinische Protonen bei 4,6 und 4,8 ppm).

### Beispiel 2: Epoxidierung

200 g Polyisobuten aus Beispiel 1, 200 ml Toluol, 18,5 Ameisensäure, 62 g Essigsäure und 55 g Wasserstoffperoxid (wässrige Lösung 50 Gew.-%) wurden in einem 1I-Vierhalskolben mit Heizbad, Rührer und Wasserabscheider unter starkem Rühren bei 300 mbar auf 60 °C erwärmt, 65 ml Toluol abdestilliert und 15 g wässrige Phase ausgekreist. Man ließ unter Rühren 1 Stunde bei 65°C nachreagieren und kühlte das Reaktionsgemisch mit Eis auf Raumtemperatur und ließ die wässrige Phase absitzen. Nach 5 min trennt man die wässrige Phase ab, versetzte die organische Phase mit 40 ml Wasser und rührte 5 min. Nach 5 min stellte man den Rührer ab und entfernte nach weiteren 5 min 46 ml wässrige Phase. Der Waschvorgang wurde wiederholt. Danach hatte die organische Phase eine Säurezahl von 2 und enthielt noch etwa 10 ppm Peroxid, das durch Zusatz von 30 g gesättigter FeCl₂-Lösung zerstört wurde. Man trennte die organische Phase ab, trocknete über Natriumsulfat und engte eine Probe bei Raumtemperatur im Vakuum (2 mbar) zur Trockene ein.

Das ¹H-NMR zeigte 1 % Olefingruppen (4,6-5,2 ppm) und 98 % Epoxygruppen, davon 97% 1,2 Epoxid (2,55-2,59 ppm), und 1% 2,3-Epoxid (2,53-2,55 ppm) bezogen auf das aromatische Proton bei 7,4 ppm.

### Beispiel 3: Herstellung eines Polyols

Man verwendete das Epoxid aus Beispiel 2 und arbeitete nach der Vorschrift der EP-A 737 662, Beispiel 1.

Man erhielt eine OH-Funktionalität von 3,5, bezogen auf das aromatische Proton bei 7,4 ppm.

### Beispiel 4: Herstellung eines Aldehyds

Man verwendete das Epoxid aus Beispiel 2 und arbeitete nach der Vorschrift der EP-A 468 966, Beispiel 4c erster Teil.

### Beispiel 5: Herstellung eines Amins

Man verwendete den Aldehyd aus Beispiel 4 und arbeitete nach der Vorschrift der EP-A 468 966, Beispiel 4c, wobei man jedoch NH₃ an Stelle von Dimethylaminopropylamin verwendete.

### Beispiel 6

1 g Polyisobutendiepoxid aus Beispiel 2 wurde in 1 ml Chloroform gelöst und mit 150 mg Trimethylolpropan-tris(3-mercaptopropionat) gemisch, in eine Glasschale überführt und innerhalb einer Stunde auf 100 °C erwärmt und nach weiteren 2 Stunden auf Raumtemperatur abgekühlt. Das entstandene Netzwerk wurde einer dynamisch-mechanischen Analyse (DMA) unterworfen. Der Speichermodul bei 75 °C lag bei 5 MPa.

### Beispiel 7

1 g Polyisobutenpolyol aus Beispiel 3 wurde in 1 ml Toluol gelöst und mit 300 mg Basonat® HI 100 (überwiegend Hexamethylendüsocyanat-Trimer als Isocyanurat) 30 min gerührt, danach mit 3 mg Dibutylzinndilaurat versetzt, in eine Schale ausgegossen und 6 Stunden auf 100 °C erwärmt. Es wurde ein leicht klebriges transparentes Netzwerk erhalten, das der dynamisch-mechanischen Analyse unterworfen wurde. Der Speichermodul bei 75 °C lag bei 8 MPa.

### Beispiel 8

1 g Polyisobutendiamin aus Beispiel 5 wurde in 1 ml Toluol gelöst und mit 200 mg Basonat® HI 100 1 min gerührt und rasch in eine Schale ausgegossen. Nach 1 min erhielt man ein Netzwerk, das nicht mehr klebrig war. Das Toluol wurde im Vakuumtrockenschrank bei 40 °C über Nacht entfernt. Dann wurde die Probe der dynamisch-mechanischen Analyse unterworfen. Der Speichermodul bei Raumtemperatur betrug 83,5 MPa, bei 75 °C 10 MPa.

### Beispiel 9: Epoxidierung in Gegenwart von Essigsäureanhydrid

12,7 g Ameisensäure, 37,9 g Essigsäureanhydrid und 74,8 g Wasserstoffperoxid (wässrige Lösung 50 Gew.-%) und 3 g Natriumformiat wurden in einem 1I-Vierhalskolben mit Heizbad, Rührer und Wasserabscheider unter starkem Rühren und Eiskühlung zusammengegeben, nach 10 Minuten mit einer Lösung aus 222 g Polyisobuten aus Beispiel 1 und 100 ml Toluol versetzt und bei 320 mbar binnen 5 Minuten auf 60 °C erwärmt, 65 ml Toluol und 10 g wässrige Phase binnen 20 Minuten ausgekreist, das wässrige Destillat abgetrennt und das Toluol in den Ansatz zurückgeführt. Man ließ unter Rühren 1 Stunde bei 60°C nachreagieren und kühlte das Reaktionsgemisch mit Eis auf RT und ließ die wässrige Phase absitzen. Nach 5 min trennt man die wässrige Phase ab, versetzte die organische Phase mit 300 ml Wasser und rührte 5 min. Nach 5 min stellte man den Rührer ab und entfernte nach weiteren 5 min die wässrige Phase. Der Waschvorgang wurde 2 Mal wiederholt. Man trennte die organische Phase ab, trocknete über Natriumsulfat und engte eine Probe bei Raumtemperautur im Vakuum (2 mbar) zur Trockene ein.

Das 1H-NMR zeigte 0,5 % Olefingruppen (4,8 ppm) und 99 % Epoxygruppen, davon 98% 1,2 Epoxid (2,55-2,59 ppm), und 1% 2,3-Epoxid (2,53-2,55 ppm) sowie 0,5 ppm Aldehyd, bezogen auf das aromatische Proton bei 7,4 ppm.

### Beispiel 10: Epoxidierung von Glissopal 1000

200 g Glissopal 1000 (hochreaktives Polyisobuten, Mn etwa 1000), 100 ml Toluol, 15 Ameisensäure, 40 g Essigsäure und 75 g Wasserstoffperoxid (wässrige Lösung 50 Gew.-%) wurden in einem 1I-Vierhalskolben mit Heizbad, Rührer und Wasserabscheider unter starkem Rühren bei 330 mbar auf 60 °C erwärmt. Es setzte eine exotherme Reaktion ein, die am beginnenden Rückfluß erkennbar war. Nach 30 Minuten wurde die Badtemperatur auf 80°C erhöht. Man kreiste etwa 25 ml Wasser aus und rührte 1 Stunde nach. Man kühlte das Reaktionsgemisch mit Eis, setze weitere 200 ml Toluol zu und ließ die wässrige Phasen absitzen. Nach 5 min trennt man die wässrige Phase ab (98 ml), versetzte die organische Phase mit 40 ml Wasser und rührte 5 min. Nach 5 min stellte man den Rührer ab und entfernte nach weiteren 5 min 46 ml wässrige Phase. Die organische Phase hatte eine Säurezahl von 2 und enthielt noch etwa 10 ppm Peroxid, das durch Zusatz von 30 g gesättigter FeCl₂-Lösung zerstört wurde. Man trennte die organische Phase ab, trocknete über Natriumsulfat und engte eine Probe bei Raumtemperautur im Vakuum (2 mbar) zur Trockene ein.

Das erhaltene Polyisobutenepoxid wurde mittels 1H-NMR-Spektroskopie untersucht. Die Ergebnisse sind in der nachstehenden Tabelle zusammengefasst.

### Vergleichsbeispiel

Man wiederholte das Beispiel 10 der US 6,303,703, wobei jedoch Glissopal 1000 an Stelle von Amoco H100HR verwendet wurde. In einem weiteren Versuch wurde die Vorschrift abgewandelt und die Umsetzung bereits nach 1 Stunde abgebrochen. Die erhaltenen Polyisobutenepoxide wurde mittels 1H-NMR-Spektroskopie untersucht. Die Ergebnisse sind in der nachstehenden Tabelle zusammengefasst.

| **Analyse** | | Beispiel 10 | Vergleichsbeispiel | |
|---|---|---|---|---|
| Reaktionsdauer [h] | | 1 | 1 | 5 |
| Olefingehalt 4,77-4,86 ppm | [%] | 2 | 25 | 0 |
| Olefingehalt 5,17-5,26 ppm | [%] | 0 | 0 | 1,7 |
| 1,2-Oxid 2,55-2,59 ppm | [%] | 90 | 49 | 74 |
| 2,3-Oxid 2,53-2,55 ppm | [%] | 8 | 8 | 8 |
| Aldehyd 8,99-9,01 ppm | [%] | 0 | 0 | 1 |
| Formiat 7,98-8,00 ppm | [%] | 0 | 0 | 0 |
| Formiat 8,11-8,13ppm | [%] | 0 | 0 | 0 |
| Alkohol 3,1-4,1 ppm | [%] | 0 | 0,1 | 0,1 |
| 7,10-7,25 ppm | [%] | 0 | 0 | *) |

| | | | | |
|---|---|---|---|---|
| *) zahlreiche Signale um 7 ppm, die nicht zugeordnet werden konnten. | | | | |

## Patentansprüche

1. Verfahren zur Epoxidierung eines ethylenisch ungesättigten Isobutenpolymers, bei dem man eine das Isobutenpolymer enthaltende organische Phase mit einer wässrigen Phase in Kontakt bringt, die Ameisensäure und Wasserstoffperoxid enthält, wobei man während der Umsetzung Wasser durch Azeotropdestillation entfernt.

2. Verfahren nach Anspruch 1, wobei die organische Phase einen aliphatischen, alicyclischen oder aromatischen Kohlenwasserstoff und/oder einen halogenierten Kohlenwasserstoff enthält.

3. Verfahren nach Anspruch 1 oder 2, wobei die wässrige Phase außerdem wenigstens einen Mediator enthält, der ausgewählt ist unter
a) von Ameisensäure verschiedenen Carbonsäuren,
b) Carbonsäureanhydriden,
c) Carbonsäuresalzen,
d) Carbonsäureestern,
e) Alkoholen,
f) Ethern.

4. Verfahren nach Anspruch 3, wobei der Mediator ausgewählt ist unter
a) Essigsäure, Propionsäure und deren Gemischen,
b) Essigsäureanhydrid,
c) Natriumformiat, Natriumacetat,
d) Essigsäureethylester,
e) Ethanol, 1-Propanol, 2-Propanol,
f) Tetrahydrofuran, Dioxan.

5. Verfahren nach einem der vorhergehenden Ansprüche, bei dem man die H₂O₂-Konzentration in der wässrigen Phase bei mindestens 45 % hält.

6. Verfahren nach einem der vorhergehenden Ansprüche, wobei man die wässrige Phase abtrennt, aufkonzentriert und die aufkonzentrierte wässrige Phase erneut mit einer ein ethylenisch ungesättigtes Isobutenpolymer enthaltenden organischen Phase in Kontakt bringt.

7. Verfahren nach einem der vorhergehenden Ansprüche, wobei man die Umsetzung bei einer Temperatur im Bereich von 50 bis 75 °C durchführt.

8. Verfahren nach einem der vorhergehenden Ansprüche, wobei man die Umsetzung bei einem Druck im Bereich von 100 bis 600 mbar absolut durchführt.

9. Verfahren nach einem der vorhergehenden Ansprüche, wobei das Isobutenpolymer durchschnittlich wenigstens 1,4 olefinische Doppelbindungen pro Molekül aufweist.

10. Verfahren nach einem der vorhergehenden Ansprüche, wobei das Isobutenpolymer wenigstens 80 Gew.-% Isobuteneinheiten umfasst.

11. Verfahren nach einem der vorhergehenden Ansprüche, wobei das Isobutenpolymer ein zahlenmittleres Molekulargewicht von 500 bis 50000 aufweist.

12. Verfahren nach einem der Ansprüche 2 bis 11, wobei der Kohlenwasserstoff unter Cyclohexan und Toluol ausgewählt ist.

13. Verfahren nach einem der vorhergehenden Ansprüche, wobei man das erhaltene epoxidierte Isobutenpolymer einer der folgenden Umsetzungen unterwirft:
a) Umsetzung mit einem Polythiol oder Polyamin,
b) Umwandlung in einen Aldehyd,
c) Umwandlung in einen Aldehyd, Umwandlung des Aldehyds in ein Oxim und Reduktion des Oxims zum Amin,
d) Umwandlung in einen Aldehyd, Umwandlung des Aldehyds in ein Formamid und Hydrolyse des Formamids zum Amin,
e) Umsetzung mit einem Boran zu einem Boratester und oxidative Spaltung des Boratesters zum 1,3-Diol.
f) Umwandlung in einen Aldehyd, Umwandlung des Aldehyds in einen Alkohol,
g) Umwandlung in einen Aldehyd, Umwandlung des Aldehyds in eine Schiff'sche Base oder ein Enamin und Reduktion der Schiff'schen Base oder des Enamins zum Amin.

## Claims

1. A process for epoxidizing an ethylenically unsaturated isobutene polymer, in which an organic phase comprising the isobutene polymer is contacted with an aqueous phase which comprises formic acid and hydrogen peroxide, wherein water is removed by azeotropic distillation during the reaction.

2. The process according to claim 1, wherein the organic phase comprises an aliphatic, alicyclic or aromatic hydrocarbon and/or a halogenated hydrocarbon.

3. The process according to claim 1 or 2, wherein the aqueous phase also comprises at least one mediator which is selected from
a) carboxylic acids other than formic acid,
b) carboxylic anhydrides,
c) carboxylic salts,
d) carboxylic esters
e) alcohols
f) ethers.

4. The process according to claim 3, wherein the mediator is selected from
a) acetic acid, propionic acid and mixtures thereof,
b) acetic anhydride,
c) sodium formate, sodium acetate,
d) ethyl acetate,
e) ethanol, 1-propanol, 2-propanol
f) tetrahydrofuran, dioxane.

5. The process according to any of the preceding claims, in which the H₂O₂ concentration in the aqueous phase is kept at at least 45%.

6. The process according to any of the preceding claims, wherein the aqueous phase is removed and concentrated, and the concentrated aqueous phase is contacted again with an organic phase comprising an ethylenically unsaturated isobutene polymer.

7. The process according to any of the preceding claims, wherein the reaction is performed at a temperature in the range of from 50 to 75°C.

8. The process according to any of the preceding claims, wherein the reaction is performed at a pressure in the range of from 100 to 600 mbar absolute.

9. The process according to any of the preceding claims, wherein the isobutene polymer has an average of at least 1.4 olefinic double bonds per molecule.

10. The process according to any of the preceding claims, wherein the isobutene polymer comprises at least 80% by weight of isobutene units.

11. The process according to any of the preceding claims, wherein the isobutene polymer has a number-average molecular weight of from 500 to 50 000.

12. The process according to any of claims 2 to 11, wherein the hydrocarbon is selected from cyclohexane and toluene.

13. The process according to any of the preceding claims, wherein the resulting epoxidized isobutene polymer is subjected to one of the following reactions:
a) reaction with a polythiol or polyamine,
b) conversion to an aldehyde,
c) conversion to an aldehyde, conversion of the aldehyde to an oxime and reduction of the oxime to the amine,
d) conversion to an aldehyde, conversion of the aldehyde to a formamide and hydrolysis of the formamide to the amine,
e) reaction with a borane, to give a borate ester and oxidative cleavage of the borate ester to the 1,3-diol,
f) conversion to an aldehyde, conversion of the aldehyde to an alcohol,
g) conversion to an aldehyde, conversion of the aldehyde to a Schiff base or an enamine and reduction of the Schiff base or of the enamine to the amine.

## Revendications

1. Procédé d'époxydation d'un polymère d'isobutène éthyléniquement insaturé, dans lequel on met en contact une phase organique contenant le polymère d'isobutène avec une phase aqueuse qui contient de l'acide formique et du peroxyde d'hydrogène, où on élimine, pendant la transformation, de l'eau par distillation azéotropique.

2. Procédé selon la revendication 1, où la phase organique contient un hydrocarbure aliphatique, alicyclique ou aromatique et/ou un hydrocarbure halogéné.

3. Procédé selon la revendication 1 ou 2, où la phase aqueuse contient en outre au moins un médiateur, qui est choisi parmi
a) les acides carboxyliques différents de l'acide formique,
b) les anhydrides d'acides carboxyliques
c) les sels d'acides carboxyliques
d) les esters d'acides carboxyliques
e) les alcools
f) les éthers.

4. Procédé selon la revendication 3, où le médiateur est choisi parmi
a) l'acide acétique, l'acide propionique et leurs mélanges,
b) l'anhydride de l'acide acétique,
c) le formiate de sodium, l'acétate de sodium,
d) l'ester éthylique de l'acide acétique,
e) l'éthanol, le 1-propanol, le 2-propanol,
f) le tétrahydrofuranne, le dioxane.

5. Procédé selon l'une quelconque des revendications précédentes, dans lequel on maintient la concentration en H₂O₂ dans la phase aqueuse à au moins 45%.

6. Procédé selon l'une quelconque des revendications précédentes, où on sépare la phase aqueuse, on la concentre et on amène à nouveau la phase aqueuse concentrée en contact avec une phase organique contenant un polymère d'isobutène éthyléniquement insaturé.

7. Procédé selon l'une quelconque des revendications précédentes, où on réalise la transformation à une température dans la plage de 50 à 75°C.

8. Procédé selon l'une quelconque des revendications précédentes, où on réalise la transformation à une pression dans la plage de 100 à 600 mbars absolus.

9. Procédé selon l'une quelconque des revendications précédentes, où le polymère d'isobutène présente en moyenne au moins 1,4 double liaison oléfinique par molécule.

10. Procédé selon l'une quelconque des revendications précédentes, où le polymère d'isobutène comprend au moins 80% en poids d'unités d'isobutène.

11. Procédé selon l'une quelconque des revendications précédentes, où le polymère d'isobutène présente un poids moléculaire numérique moyen de 500 à 50 000.

12. Procédé selon l'une quelconque des revendications 2 à 11, où l'hydrocarbure est choisi parmi le cyclohexane et le toluène.

13. Procédé selon l'une quelconque des revendications précédentes, où on soumet le polymère d'isobutène époxydé obtenu à une des transformations suivantes :
a) transformation avec un polythiol ou une polyamine,
b) transformation en aldéhyde,
c) transformation en aldéhyde, transformation de l'aldéhyde en oxime et réduction de l'oxime en amine,
d) transformation en aldéhyde, transformation de l'aldéhyde en formamide et hydrolyse du formamide en amine,
e) transformation avec un borane en un ester de borate et dissociation par oxydation de l'ester de borate en 1,3-diol,
f) transformation en aldéhyde, transformation de l'aldéhyde en alcool,
g) transformation en aldéhyde, transformation de l'aldéhyde en base de Schiff ou une énamine et réduction de la base de Schiff ou de l'énamine en amine.
